# EUROPÄISCHE PATENTSCHRIFT

(11) **EP 1 492 893 B1**
(45) Veröffentlichungstag und Bekanntmachung des Hinweises auf die Patenterteilung: **21.11.2007**
(21) Anmeldenummer: 03714765.9
(22) Anmeldetag: 01.03.2003
(51) Int. Cl.: C21C 5/00, C21C 7/064, C21C 7/068, C21C 5/42, F27B 19/04

(54) **VERFAHREN UND EINRICHTUNG ZUM ERZEUGEN VON NICHTROSTENDEM STAHL, INSBESONDERE VON CHROM- ODER CHROMNICKELHALTIGEM EDELSTAHL**
METHOD AND INSTALLATION FOR PRODUCING STAINLESS STEEL, ESPECIALLY HIGH-QUALITY STEEL CONTAINING CHROMIUM OR NICKEL CHROMIUM
PROCEDE ET INSTALLATION POUR PRODUIRE DE L'ACIER INOXYDABLE, NOTAMMENT DE L'ACIER FIN RENFERMANT DU CHROME OU DU NICKEL-CHROME

(30) Priorität: 10.04.2002 DE 10215828
(43) Veröffentlichungstag der Anmeldung: 05.01.2005
(73) Patentinhaber: SMS Demag Aktiengesellschaft, 40237 Düsseldorf (DE)
(72) Erfinder: PLESCHIUTSCHNIGG, Fritz-Peter, 47269 Duisburg (DE); MEIERLING, Peter, 40474 Düsseldorf (DE); SCHNEIDER, Karl-Josef, 46514 Schermbeck (DE); PETRY, Jochen, 47226 Duisburg (DE)
(74) Vertreter: Klüppel, Walter
(86) Internationale Anmeldenummer: PCT/EP2003/002133
(87) Internationale Veröffentlichungsnummer: WO 2003/085140

(56) Entgegenhaltungen:
- EP-A- 0 714 989
- DE-A- 1 433 535
- DE-A- 19 621 143
- MASUMITSU NORIYUKI, TANAKA RYUTATSU, INOUE TAKASHI, SATO SHINGO, TAKASHIMA KIYOSHI: "Development of Steelmaking Process for Stainless Steel by Top and Bottom Blowing with Coke Addition in Converter" TRANS IRON STEEL INST JPN, 1986, Seiten 519-527, XP009010638

## Beschreibung

Die Erfindung betrifft ein Verfahren und eine Einrichtung zum Erzeugen von nichtrostendem Stahl, insbesondere von chrom- oder chromnickelhaltigem Edelstahl, unmittelbar aus phosphorreichem, flüssigem Roheisen.

Derartige Verfahren werden in einer ein oder zwei oder mehr Gefäße umfassenden Schmelzanlage durchgeführt, wobei das oder die Gefäße entweder im Elektrolichtbogen- oder im Sauerstoffaufblas-Verfahren betrieben werden. Die Schritte hierbei sind
(a) Chargieren von eisenhaltigem Flüssig- und / oder Festeinsatz und Legierungsträgern,
(b) Erschmelzen des Einsatzes über Lichtbogen,
(c) Frischen der Schmelze durch Sauerstoffblasen,
(d) Reduzieren der chromoxidhaltigen Schlacke.
Der abgestochene flüssige Stahl wird unmittelbar einer Weiterverarbeitung zugeführt. Eine solche Weiterverarbeitung besteht z.B. aus einer VOD-Anlage (Vacuum- Oxygen-Decarburization) und einer nachfolgenden Stranggießanlage, der die Schmelze über Gießpfannen zugeführt wird.

Das dabei ausgeübte Verfahren ist z.B. aus der DE 196 21 143 A1 bekannt. Bei dem Verfahren wird zeitgleich neben dem entkohlenden Verblasen der Charge in einem ersten Gefäß der Schmelzprozess einer zweiten Charge in einem zweiten Gefäß durchgeführt. Dieses Verfahren verringert zwar die Prozessschritte gegenüber früher angewendeten Verfahren und reduziert den Energieverbrauch bei den einzelnen Prozessschritten, z.B. wird ein häufigeres Umfüllen mit allen Wärmeverlusten eingespart. Außerdem sind die Betriebsaggregate mit geringer Bauhöhe gestaltet. Das Verfahren bildet außerdem die Grundlage für die Versorgung einer kontinuierlichen Stranggießmaschine, da jeweils nach der Fertigstellung einer Schmelze in einem der Gefäße wieder eine neue Charge für das Stranggießen zur Verfügung steht, so dass die Stranggießanlage ohne Unterbrechung betrieben werden kann.

Der Erfindung liegt die Aufgabe zugrunde, unter Einhaltung der für das Betreiben einer Stranggießanlage notwendigen Zeitabstände für das Beliefern mit Schmelzen, das Mehr-Gefäß-System zu ersetzen oder die Gefäße des Mehr-Gefäß-Systems für die gleichzeitige Erschmelzung von mehreren Chargen für mehrere Stranggießadern einzusetzen.

Die gestellte Aufgabe wird erfindungsgemäß durch das Verfahren gemäß Anspruch 1 und durch die Vorrichtung gemäß Anspruch 8 gelöst. Die Abstichzeiten liegen damit in den Intervallen einer Stranggießanlage und das Verfahren kann in Einzelgefäßen und in Schmelzanlagen mit einem oder mehreren Gefäßen, jeweils nach der gewünschten Kapazität der nachfolgenden Anlagen in jedem der einzelnen Gefäße oder Öfen selbständig ausgeübt werden.

Bevorzugte Ausführungsformen sind in den abhängigen Ansprüchen definiert.

In der Zeichnung sind Ausführungsbeispiele der Erfindung dargestellt, anhand deren auch das Verfahren nachstehend näher erläutert wird.

Es zeigen:
- Fig. 1: einen Zeitplan für die in zwei selbständigen Gefäßen durchführbaren Verfahrensschritte,
- Fig. 2: einen Schnitt durch die beiden zusammenwirkenden Gefäße mit gemeinsamer Schwenk- und Hub-Einrichtung für die Elektroden und die Top-Blaslanze bzw. die Seitenlanzen und
- Fig. 3: einen senkrechten Schnitt durch ein Gefäß als Elektrolichtbogen-Ofen mit einer Wandungs-Öffnung zum Abstechen der Schlacke.

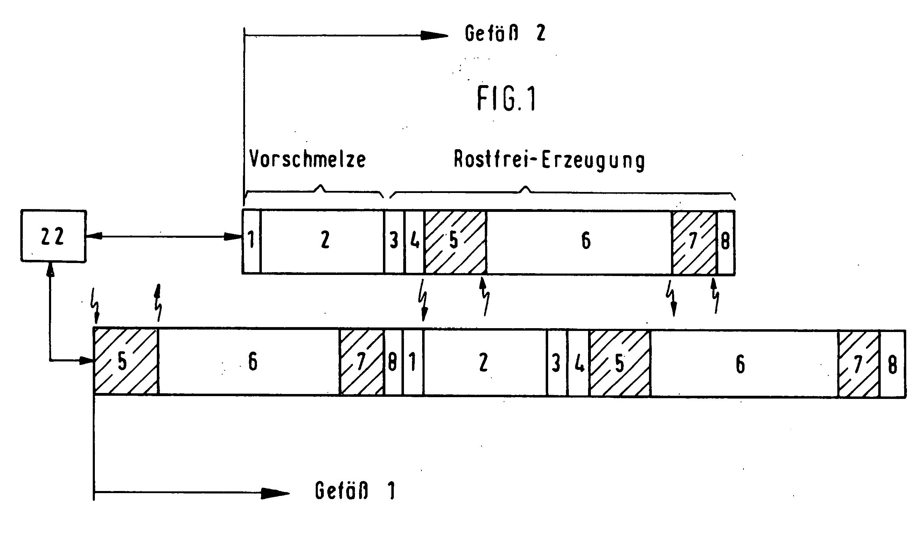

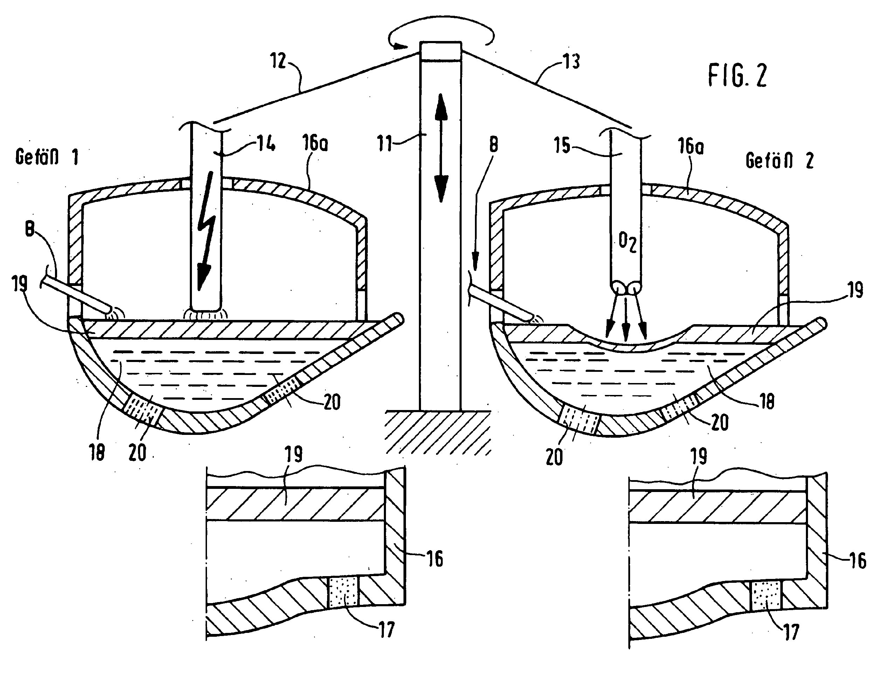

Dem gemäß Fig. 1 zu erläuternden Verfahren mit den Gefäßen 1 und 2, liegt gemäß Fig. 2 eine Schmelzanlage zugrunde, in der sich das Gefäß 1 und das Gefäß 2, als Elektrolichtbogenofen oder als Konverter ausgestaltet, in einem Abstand befinden, in dem eine Hub- und Schwenkeinrichtung 11 angeordnet ist, die über Arme 12 und 13 ein Elektroden-System 14 und eine Top-Blaslanze 15 in die Gefäße 1 und 2 absenken, hochfahren und schwenken kann. Dabei werden die Blaslanze 15 und das Elektroden-System 14 in den jeweiligen Betriebsabstand gebracht, wie gezeichnet. Das Gefäß 1 oder das Gefäß 2 kann jeweils auch als Erkerofen 16 mit einem außermittigen Abstich 17 oder als Schnauzenkipper und einem Ofendeckel 16a ausgeführt sein. In den Gefäßen 1, 2 oder 16 befindet sich die dem Verfahren zugrundeliegende Schmelze 18 mit einer Schlackenschicht 19. Die Gefäße 1 und 2 sind ferner mit Bodenspülsteinen 20 ausgestattet.

Gemäß Fig. 1 ist nunmehr das Verfahren zum Erzeugen von nichtrostendem Stahl, insbesondere von chrom- oder chromnickelhaltigem Edelstahl, anhand von zwei parallelen, teilweise hintereinander ablaufenden Schmelzen ( Schmelze 1 und Schmelze 2) in dem Gefäß 1 und dem Gefäß 2 dargestellt. Die in Fig. 2 gezeigte Schmelz-einrichtung arbeitet momentan im Gefäß 1 mit dem Elektroden-System 14 und im Gefäß 2 mit der Top-Blaslanze 15 und / oder mit der Seitenlanze B.

Die 1. Schmelze ( mit Vorschmelze bezeichnet) startet im Gefäß 2 mit dem Chargieren von Flüssig- und / oder Festeinsätzen im **Schritt 1**, wobei phosphorreiches Roheisen eingesetzt wird. Danach wird in einem **Schritt 2** das Entphosphoren des flüssigen Roheisens mit einer O₂-Top-Blaslanze 15 bei kontinuierlicher Zugabe von Schlackenbildnern, wie z.B. Kalk, Dolomit, und ggfs. feste Kühlstoffe, wie z.B. Schrott, Eisenschwamm u. dgl. durchgeführt, wobei unter einem kontinuierlichen Ablaufenlassen der phosphorreichen Schlacke 19 durch eine seitliche Wandungs-Öffnung 21 a das Abschlacken erfolgt. In einem **Schritt 3** wird ein End-Abschlacken durchgeführt, wobei die phosphorreiche Schlacke 19 sauber abgezogen wird. Damit hat bereits die Rostfrei-Erzeugung von Edelstahl begonnen. Dazu erfolgt im nächsten **Schritt 4** das Chargieren von Schrott, Ferro-Legierungen und von Schlackebildnern. Im **Schritt 5** beginnt das Einschmelzen und Erhitzen. Dazu ist das Elektroden-System 14 für die Dauer des Schrittes 5 über das Gefäß 1 zu schwenken und in Betriebsstellung wie gezeichnet einzufahren. Im nächsten **Schritt 6** findet das O₂ -Blasen mit der Top-Blaslanze 15 und der Seitenlanze B zum Entkohlen der chrom- und / oder chromnickelreichen Stahlschmelze statt. Falls erforderlich, werden feste Kühlstoffe kontinuierlich zugegeben, wie z.B. FeCr, FeNi, Schrott, Eisenschwamm u. dgl. und es wird bis zu einem Kohlenstoffgehalt kleiner 1,0% C geblasen. Im **Schritt 7** erfolgt das Reduzieren der hochchromhaltigen Schlacke unter der Energie des Elektroden-Systems 14 bei Zugabe von Reduktionsmitteln, wie z.B. FeSi, Al, u. dgl. Im **Schritt 8** wird der Flüssigstahl mit Schlacke abgestochen, wobei eine Restreduktion der Schlacke während des Abstichs und in der Pfanne durch starkes Spülen durch die Bodenspülsteine 20 vorgenommen wird.

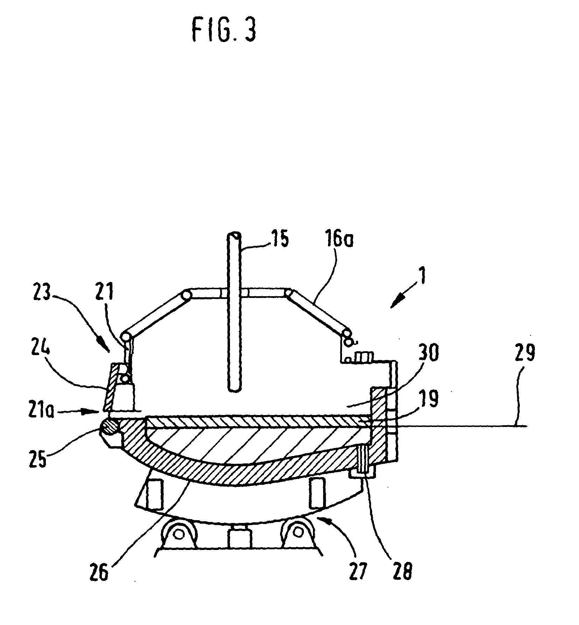

Das Chargieren von Roheisen kann auch über eine Rinne erfolgen. Sodann ist in Fig. 3 in der Gefäß-Wandung 21 eine verschließbare Wandungs-Öffnung 21 a für eine Seiten-Blaslanze B und / oder eine Top-Blaslanze 15 vorgesehen. Im Bereich des Gefäßes 1; 2 ist die Hub- und Schwenkeinrichtung 11 für ein schwenkbares Elektroden-System 14 und / oder die Top-Blaslanze 15 eingebracht, Die verschließbare Wandungs-Öffnung 21 a besitzt einen Hubantrieb 23 für eine Verschlussplatte 24. In der FF-Ausmauerung 26 ist an der Abstechkante ein Graphit-Balken 25 angeordnet, so dass bei leichten Kippbewegungen des Gefäßes 1; 2 auf der Kipplagerung 27 die Schlacke 19 abfließt. Das Abstechen des Flüssigstahls kann wie üblich durch den Bodenabstich 28 im Erker 30 erfolgen. Der Graphit-Balken 25 ist auf die geforderte Badspiegelhöhe 29 abgestimmt angeordnet. Die Wandungs-Öffnung 21 a befindet sich in der Wandung des Ofendeckels 16a.

Zwischen den Gefäßen 1 und 2 (Fig. 1) ist eine Logistik 22 für das Einbringen von elektrischer Energie zum Einschmelzen und / oder Überhitzen der Schmelze 18 und / oder Reduzieren der Schlacke 19 in der Art vorgesehen, dass das Einschmelzen und / oder Überhitzen und / oder das Reduzieren in den beiden Gefäßen 1; 2 nicht zeitgleich durchgeführt und ebenso Sauerstoff über die Sauerstoff-Blaslanzen nur in bestimmten Zeitabschnitten zugeführt werden kann.

Das Verfahren im Gefäß 1 beginnt daher mit dem Schritt 5 (Einschmelzen und Erhitzen), auf den der Schritt 6 (O₂-Blasen mit Top-Blaslanze und Seitenlanzen zum Entkohlen) folgt, weiter mit dem Schritt 7 (Reduzieren der hochchromhaltigen Schlacke unter dem Lichtbogen und Zugabe von Reduktionsmitteln), sowie dem Schritt 8 (Abstechen des Flüssigstahls mit Schlacke) und tritt in ein neues Intervall mit dem Schritt 1 (Chargieren von phosphorreichem Flüssig-Roheisen) ein, an dessen Ende im Gefäß 2 das Elektroden-System 14 benötigt wird und in der dortigen Zeit im Gefäß 1 der Schritt 2 abläuft, in dem das Entphosphoren des Flüssig-Roheisens mit der O₂-Blaslanze stattfindet. Dadurch wird eine gegenseitige Behinderung der Schmelzen in den beiden Gefäßen ausgeschlossen, was durch die Logistik 22 kontrolliert wird.

### Bezugszeichenliste

- 1.: Gefäß 1
- 2.: Gefäß 2
- 11.: Hub- und Schwenkeinrichtung
- 12.: Arm
- 13.: Arm
- 14.: Elektroden-System
- 15.: Top-Blaslanze
- 16.: Erkerofen
- 16a: Ofendeckel
- 17.: außermittiger Abstich
- 18.: Schmelze
- 19.: Schlacke / Schlackenschicht
- 20.: Bodenspülstein
- 21.: Gefäß-Wandung
- 21 a: seitliche Wandungs-Öffnung
- 22.: Logistik
- 23.: Hubantrieb
- 24.: Verschlussplatte
- 25.: Graphit-Balken
- 26.: FF-Ausmauerung
- 27.: Kipplagerung
- 28.: Bodenabstich
- 29.: Badspiegelhöhe
- 30.: Erker
- B: Tür-Blaslanze, Seiten-Blaslanze
- Schritt 1: Chargieren von phosphorreichem Flüssig-Roheisen
- Schritt 2: Entphosphoren des Flüssig-Roheisens mit O₂ -Top-Blaslanze
- Schritt 3: End-Abschlacken
- Schritt 4: Chargieren von Schrott, Ferro-Legierungen und Schlackenbildnern
- Schritt 5: Einschmelzen und Erhitzen
- Schritt 6: O2-Blasen mit Top-Blaslanze und Seitenlanzen zum Entkohlen
- Schritt 7: Reduzieren der hochchromhaltigen Schlacke unter dem Lichtbogen und unter Zugabe von Reduktionsmitteln
- Schritt 8: Abstechen des Flüssigstahls mit Schlacke

- O₂: ↓ Sauerstoff einführen
- O₂: ↑ Sauerstoff abschalten
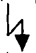 Elektrolichtbogen einschalten
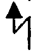 Elektrolichtbogen abschalten.

## Patentansprüche

1. Verfahren zum Erzeugen von nichtrostendem Stahl, insbesondere von chrom- oder chromnickelhaltigem Edelstahl, unmittelbar aus phosphorreichem flüssigen Roheisen in einem einzigen Gefäß (1; 2), wobei nach einem Entphosphoren des Flüssig-Roheisens und nach Abziehen der phosphorreichen Schlacke (19) Legierungselemente in das Gefäß (1; 2) chargiert, danach eine Entkohlung der Schmelze (18) und eine Reduktion der Schlacke (19) durchgeführt und schließlich die Schmelze (18) mit der Schlacke (19) abgestochen wird, **dadurch gekennzeichnet, dass** durch mehrmaliges abwechselndes Einschwenken im Gefäß (1; 2) eine Top-Blaslanze (15) und ein Elektroden-System (14) eingesetzt werden, wobei im einzelnen folgende Verfahrensschritte hintereinander durchgeführt werden:
• Entphosphoren des Roheisens bei gleichzeitigem Eisenverschlacken, Entkohlen und Entsilizieren unter Zugabe von Schlackenbildnern und/oder festen Kühlstoffen durch Sauerstoffaufblasen mit der Top-Blaslanze (15),
• Einschmelzen und Erhitzen von zuchargiertem Chrom und/oder Schrott sowie anderen Legierungselementen und von Schlackenbildnern durch das Elektroden-System (14) nach Abführen der phosphorreichen Schlacke (19),
• Entkohlen der chrom-und/oder chromnickelreichen Stahlschmelze (18) durch Sauerstoffaufblasen mit der Top-Blaslanze (15) und einer Seitenlanze (B) bis zu einem Kohlenstoffgehalt kleiner 1,0 %,
• Reduzieren der hochchromhaltigen Schlacke (19) durch das Elektroden-System (14) unter Zugabe von Reduktionsmitteln.

2. Verfahren nach Anspruch 1, **dadurch gekennzeichnet, dass** neben restlichen Einsatzstoffen 30 bis 80% flüssiges Roheisen eingesetzt wird.

3. Verfahren nach Anspruch 1, 2 oder 3, **dadurch gekennzeichnet, dass** das flüssige, phosphorreiche Roheisen durch Sauerstoffaufblasen an zumindest zwei Badspiegelstellen entphosphort wird bei etwa gleichzeitigem kontinuierlichem Ablaufenlassen der flüssigen phosphorreichen Schlacke (19) durch eine seitliche Wandungs-Öffnung (21 a).

4. Verfahren nach Anspruch 3, **dadurch gekennzeichnet, dass** zum End-Abschlacken die phosphorreiche Schlacke mit Restschlackengehalten kleiner 30% sauber abgezogen wird.

5. Verfahren nach einem der Ansprüche 1 bis 4, **dadurch gekennzeichnet, dass** zum Entkohlen der chrom- und/oder nickelreichen Stahlschmelze, falls erforderlich, feste Kühlstoffe wie beispielsweise FeCr, FeNi, Schrott, Eisenschwamm u. dgl. kontinuierlich zugegeben werden.

6. Verfahren nach einem der Ansprüche 1 bis 5, **dadurch gekennzeichnet, dass** die Schlacke (19) während des gemeinsamen Abstichs mit der Stahlschmelze (18) in die Pfanne (Perrin-Effekt) und/oder in der Pfanne durch starkes Spülen mittels Bodenspülsteinen (20) restlich final reduziert wird.

7. Verfahren nach einem der Ansprüche 1 bis 6, **dadurch gekennzeichnet, dass** bei einem parallelen Einsatz von zwei Gefäßen (1; 2) zwischen den Gefäßen (1) und (2) eine Logistik (22) für das Einbringen von elektrischer Energie durch das Elektroden-System (14) und für das Einblasen von Sauerstoff über die Top-Blaslanze (15) und der Seitenlanze (B) derart gestaltet ist, dass das gleichzeitige Einbringen von elektrischer Energie bzw. das gleichzeitige Einblasen von Sauerstoff in den beiden Gefäßen (1) und (2) nicht zeitgleich durchführbar sind.

8. Einrichtung zur Erzeugung von nichtrostendem, insbesondere chromhaltigem oder chromnickelhaltigem Stahl unmittelbar aus phosphorhaltigem flüssigen Roheisen in einer aus einem, zwei oder mehreren Gefäßen (1; 2) bestehenden Schmelzanlage, wobei mit Hilfe einer über jedes Gefäß (1; 2) einschwenkbaren Top-Blaslanze (15) und eines einschwenkbaren Elektroden-Systems (14) nach einem Entphosphoren des Flüssig-Roheisens und nach Abziehen der phosphorreichen Schlacke (19) Legierungselemente in das Gefäß (1; 2) chargiert, danach eine Entkohlung der Schmelze (18) und eine Reduktion der Schlacke (19) durchgeführt und schließlich die Schmelze (18) mit der Schlacke (19) abgestochen wird, insbesondere zur Durchführung des Verfahrens nach den Ansprüchen 1 bis 7, **gekennzeichnet durch** eine für eine Seiten-Blaslanze (B) und für die **durch** Kippen des Gefäßes (1; 2) abzustechende Schlacke (19) im Ofendeckel (16a) etwa auf der Badspiegelhöhe (29) angeordnete verschließbare Wandungs-Öffnung (21a) mit einem Hubantrieb (23) für eine Verschlussplatte (24) und mit einem an ihrer Abstechkante in der FF-Ausmauerung (26) angeordneten Graphit-Balken (25), so dass bei leichten Kippbewegungen des Gefäßes (1; 2) auf der Kipplagerung (27) die Schlacke (19) abfließt.

## Claims

1. Method of producing stainless steel, particularly of high-quality steel containing chromium or chromium-nickel, directly from phosphoric liquid pig iron in a single vessel (1; 2), wherein after dephosphorising of the liquid pig iron and after withdrawal of the phosphoric slag (19) alloying elements are charged into the vessel (1; 2), thereafter a decarbonisation of the melt (18) and a reduction of the slag (19) are carried out and subsequently the melt (18) together with the slag (19) is tapped off, **characterised in that** through multiple alternating pivotation into the vessel (1; 2) a top blowing lance (15) and an electrode system (14) are used, wherein in particular the following method steps are carried out in succession:
- dephosphorisation of the pig iron with simultaneous formation of iron slag, decarbonisation and desiliconisation with addition of slag formers and/or solid cooling substances by oxygen converting by the top blowing lance (15),
- melting in and heating of additionally charged chromium and/or scrap as well as other alloying elements and of slag formers by the electrode system (14) after discharge of the phosphoric slag (19),
- decarbonisation of the steel melt (18), which is rich in chromium and/or chromium-nickel, by oxygen converting with the top blowing lance (15) and a side lance (B) until a carbon content less than 1.0% and
- reducing the slag (19) with high chromium content by the electrode system (14) with addition of reducing agents.

2. Method according to claim 1, **characterised in that** apart from residual additives 30 to 80% of liquid pig iron is used.

3. Method according to claim 1 or 2, **characterised in that** the liquid phosphoric pig iron is dephosphorised by oxygen converting at at least two bath surface locations with approximately simultaneous continuous discharge of the liquid phosphoric slag (19) via a lateral wall opening (21a).

4. Method according to claim 3, **characterised in that** for final deslagging the phosphoric slag with residual slag content of less than 30% is withdrawn unpolluted.

5. Method according to one of claims 1 to 4, **characterised in that** for decarbonisation of the steel melt rich in chromium and/or nickel solid cooling substances such as, for example, FeCr, FeNi, scrap, iron sponge and the like are, if required, continuously added.

6. Method according to one of claims 1 to 5, **characterised in that** the slag (19) during the common tapping off with the steel melt (18) is reduced to a residual final state in the ladle (Perrin effect) and/or in the ladle by strong washing by means of base washing blocks (20).

7. Method according to one of claims 1 to 6, **characterised in that** in the case of parallel use of two vessels (1; 2) a logistical system (22) for the introduction of electrical energy by the electrode system (14) and for the blowing-in of oxygen via the top blowing lance (15) and the side lance (B) is formed between the vessels (1 and 2) in such a manner that the simultaneous introduction of electrical energy or the simultaneous blowing-in of oxygen into the two vessels (1 and 2) cannot be carried out simultaneously.

8. Equipment for producing stainless steel, particularly steel containing chromium and/or chromium-nickel, directly from phosphoric liquid pig iron in a smelting plant consisting of one, two or more vessels (1; 2), wherein with the help of a top blowing lance (15), which is pivotable in over each vessel (1; 2), and a pivotable-in electrode system (14) after a dephosphorisation of the liquid pig iron and after withdrawal of the phosphoric slag (19) alloying elements are charged into the vessel (1; 2), thereafter a decarbonisation of the melt (18) and a reduction of the slag (19) are carried out and finally the melt (18) together with the slag (19) is tapped off, particularly for carrying out the method according to claims 1 to 7, **characterised by** a closable wall opening (21a), which is arranged for a side blowing lance (B) and for the slag (19) - which is to be tapped off by tipping the vessel (1; 2) - in the furnace cover (16a) approximately at the bath surface height (29), with a lifting drive (23) for a closure plate (24) and with a graphite beam (25) arranged at its tap-off edge in the refractory lining (26), so that on slight tipping movements of the vessel (1; 2) on the tip bearing (27) the slag (19) flows out.

## Revendications

1. Procédé pour la production d'acier inoxydable, notamment d'acier fin contenant du chrome ou du nickel-chrome, directement à partir de fonte brute liquide, riche en phosphore, dans une cuve unique (1 ; 2), directement après la déphosphoration de la fonte brute liquide et après retrait de la scorie riche en phosphore (19), des éléments d'alliage étant chargés dans la cuve (1 ; 2), puis une décarburation de la masse fondue (18) et une réduction de la scorie (19) étant réalisées et finalement la masse fondue (18) étant percée avec la scorie (19), **caractérisé en ce que**, par pivotement alterné répété dans la cuve, (1 ; 2) une top-lance à oxygène (15) et un système d'électrodes (14) sont mis en oeuvre, alors que dans les détails, les étapes de procédé suivantes sont réalisées successivement :
• déphosphoration de la fonte brute avec scorification simultanée de la fonte, décarburation et désiliciation avec ajout de fondants de scorification et/ou d'agents réfrigérants solides par soufflage d'oxygène avec la top-lance à oxygène (15),
• fusion et échauffement de chrome et/ou de ferrailles alimentés, ainsi que d'autres éléments d'alliage et de fondants de scorification par le système d'électrodes (14), après évacuation de la scorie (19),
• décarburation de la masse d'acier fondue (18) riche en chrome et/ou en nickel-chrome par soufflage d'oxygène avec la top-lance à oxygène (15) et une lance latérale (B), jusqu'à une teneur en carbone inférieure à 1,0 %,
• réduction de la scorie (19) à haute teneur en chrome par le système d'électrodes (14), avec ajout d'agents réducteurs.

2. Procédé selon la revendication 1, **caractérisé en ce que**, hormis des agents de cémentation résiduels, on met encore en oeuvre de 30 à 80% de fonte brute liquide.

3. Procédé selon la revendication 1, 2 ou 3, **caractérisé en ce que** l'on déphosphore la fonte brute liquide riche en phosphore par soufflage d'oxygène sur au moins deux points au niveau du bain, en laissant s'écouler en continu, de façon quasiment simultanée la scorie (19) riche en phosphore par une ouverture latérale dans la paroi (21a).

4. Procédé selon la revendication 3, **caractérisé en ce que**, pour l'écumage final, on retire proprement la scorie riche en phosphore avec des teneurs en scorie résiduelle inférieures à 30%.

5. Procédé selon l'une quelconque des revendications 1 à 4, **caractérisé en ce que**, pour la décarburation de la masse d'acier fondue riche en chrome et/ou en nickel, on ajoute en continu, si nécessaire des agents réfrigérants solides, comme par exemple du FeCr, du FeNi, des ferrailles, de l'éponge de fer et similaire.

6. Procédé selon l'une quelconque des revendications 1 à 5, **caractérisé en ce que** pendant la percée commune avec la masse d'acier fondue (18), on procède à la réduction résiduelle finale de la scorie (19) vers la poche de coulée (effet de Perrin) et/ou dans la poche de coulée, par rinçage fort au moyen de conduits de fond (20).

7. Procédé selon l'une quelconque des revendications 1 à 6, **caractérisé en ce que**, lors d'une utilisation parallèle de deux cuves (1 ; 2), entre les cuves (1) et (2), une logistique (22) pour l'introduction d'énergie électrique par le système d'électrodes (14) et pour le soufflage d'oxygène par l'intermédiaire de la top-lance à oxygène (15) et la lance latérale (B) est conçue de sorte que l'introduction simultanée d'énergie électrique ou le soufflage simultané d'oxygène dans les deux cuves (1) et (2) ne soient pas réalisables en même temps.

8. Installation pour la production d'acier inoxydable, notamment d'acier contenant du chrome ou du nickel-chrome, directement à partir de fonte brute liquide contenant du phosphore dans une installation de coulée consistant dans un ou dans plusieurs cuves (1 ; 2) à l'aide d'une top-lance à oxygène (15) susceptible de pivoter par le dessus de chaque cuve (1 ; 2) et d'un système d'électrodes (14) susceptible de pivoter, après une déphosphoration de la fonte brute liquide et après retrait de la scorie riche en phosphore (19), on charge des éléments d'alliage dans la cuve (1; 2), puis on procède à une décarburation de la masse fondue (18) et à une réduction de la scorie (19) et finalement on perce la masse fondue (18) avec la scorie (19), notamment pour la réalisation du procédé selon les revendications 1 à 7, **caractérisée par** une lance à oxygène latérale (B) et par une ouverture fermable dans la paroi (21a), disposée dans le couvercle du four (16a), à peu près à hauteur du niveau du bain (29), pour la scorie (19) à percer par basculement de la cuve (1 ; 2) avec un entraînement en levée (23) pour une plaque de fermeture (24) et avec une barre de graphite (25) disposée dans la chemise de four FF (26) sur l'arête de percée, pour que lors de légers mouvements de basculement de la cuve (1 ; 2) sur le logement pivotant (27), la scorie (19) s'écoule.
